# EUROPÄISCHE PATENTSCHRIFT

(11) **EP 1 669 737 B1**
(45) Veröffentlichungstag und Bekanntmachung des Hinweises auf die Patenterteilung: **11.09.2013**
(21) Anmeldenummer: 05026943.0
(22) Anmeldetag: 09.12.2005
(51) Int. Cl.: G01N 21/35, C05F 7/00, C05F 3/00, B01J 20/14, B01J 20/16, B01J 20/18, B01J 20/28, B82Y 30/00

(54) **Verfahren zur Bestimmung von eutrophen Stoffen**
Method for identifying eutrophic materials
Méthode pour identifier des matériaux eutrophiques

(30) Priorität: 10.12.2004 AT 20842004
(43) Veröffentlichungstag der Anmeldung: 14.06.2006
(73) Patentinhaber: IPUS Mineral- & Umwelttechnologie GmbH, 8786 Rottenmann (AT)
(72) Erfinder: Lesjak, Meinhard Dipl.-Ing., 8943 Aigen im Ennstal (AT)
(74) Vertreter: Ofner, Clemens

(56) Entgegenhaltungen:
- WO-A-02/00930
- WO-A-99/66304
- DE-A1- 19 728 873
- DE-A1- 19 954 783
- US-A1- 2002 007 686
- US-A1- 2004 112 297
- PATENT ABSTRACTS OF JAPAN Bd. 1999, Nr. 05, 31. Mai 1999 (1999-05-31) & JP 11 046609 A (IRIS OHYAMA INC), 23. Februar 1999 (1999-02-23)

## Beschreibung

Die Erfindung betrifft ein Verfahren zur Schnellanalytik der chemischen Zusammensetzung von pastösen bzw. flüssigen, eutrophen, vorzugsweise heterogenen und nicht hygienischen Stoffen, wie tierische Exkremente, Gülle, Gärsubstrate und Gärprodukte der Biogasgewinnung sowie Klärschlamm, sowie ein Verfahren zur Steuerung und/oder Regelung von Biogasanlagen.

Eutrophe - mit Reststoffen stark befrachtete - Substanzen wie tierische Exkremente, Gülle, Biogasprodukte und Klärschlamm sind wertvolle Nährstoff- bzw. Energieträger, deren optimale Nutzung und geordnete Rückführung in den Naturkreislauf eine bestmögliche Kenntnis der Inhaltsstoffe voraussetzt. Zwischen Fütterung, Nährstoffgehalt der Exkremente, Nutzen und Umweltbelastung besteht eine enge Beziehung, wie dies in Honeyman, M., S., Environment: friendly swine feed formulation to reduce nitrogen and phosphorus excretion, American Journal of Alternative Agriculture 8(3):128-132, 1993, ausgeführt wird. In der Praxis liegen aber im Hinblick auf eine optimale Fütterung bzw. Düngung mit Gülle oder Klärschlamm bzw. die Prozess-Steuerung von Biogasanlagen aus Gründen der Manipulation und der Kosten nur in wenigen Fällen echte Analysendaten vor.

Gülle als landwirtschaftliches Abprodukt stellt einerseits einen rasch wirksamen Pflanzennährstoff dar, andererseits kann Gülle aber durch einen hohen Tierbesatz pro Flächeneinheit und intensive Eiweißfütterung zu Umweltproblemen führen. Neben unmittelbaren Belastungen bei der Ausbringung ist ein Einfluss auf den lokalen und überregionalen Stickstoffhaushalt durch Emissionen auch während der Lagerung gegeben. Einerseits zur Erstellung einer betrieblichen Nährstoffbilanz, andererseits zur Güllebehandlung und Optimierung der Düngung ist die Kenntnis der Hauptnährstoffe von Vorteil. Als für die praktische Anwendung wesentliche Parameter sind anzuführen: Gesamtstickstoff, Ammoniumstickstoff, Gesamtkohlenstoff, Trockenmasse, Phosphat, Kalium, Calcium und die Summe aller Mineraloxide in Form des Aschegehalts.

In der Praxis wurden dazu verschiedene Verfahren erprobt, eine zufriedenstellende rasche und kostengünstige Ermittlung der Zusammensetzung von tierischen Exkrementen bzw. Gülle steht aber bis heute nicht zur Verfügung. In Entwicklung stehen spektroskopische Verfahren zur Ermittlung der Güllenährstoffe wie die Nahinfrarotspektroskopie (NIRS), wie aus Donald, J. D., Kevin, D. D, The Physics of Near-Infrared Scattering in Williams, P., Norris, K. Near-Infrared Technology. American Association of Cereal Chemists, St. Paul, Minnesota USA, 2001, zu entnehmen ist. Dabei werden die Proben jedoch im flüssigen Zustand in eigens konstruierten Messzellen vermessen, oder müssen aus trockenen Proben gezielte Eluate hergestellt werden, die entweder im flüssigen Zustand oder an Trägermaterialien adsorbiert vermessen werden, wobei methodische Einschränkungen, wie das notwendige Homogenisieren der Probe, Temperieren der Messzelle, deren geringe Spaltbreite und Entmischung der Probe während der Messung sowie aufwändige Reinigungsschritte gegeben sind.

Einen weiteren Überblick über den Stand der Technik bieten auch Malley, D. F.; Yesmin, L.; Eilers, R. G., Rapid Analysis of Hog Manure and Manure-amended Soils Using Near-infrared Spectroscopy, Soil Sci. Soc. Am. J. 66,1677-1686,2002, bzw. Andree H., Dolud M., Hügle .T, Echtzeitanalyse von Gülle mit Nahinfrarot-spektroskopie (NIRS) - Verfahren und Anwendungsgebiete, Vortrag VDI Tagung, 2004.

Die DE 199 54 783 A1 beschreibt ein Verfahren zur Ermittlung des Gehaltes an Stickstoff und/oder Kohlenstoff aus der organischen Substanz in Böden, Erden, Sedimenten und Komposten, bei dem aus der Probe Fraktionen mittels Wasser und/oder chemischen Mitteln, die über dispergierende Eigenschaften verfügen und gleichzeitig Tauschprozesse begünstigen, aufbereitet, analysiert und verglichen werden. Dabei wird aus nasschemischen aufbereiteten Fraktionen der Stickstoff- und Kohlenstoffgehalt ermittelt und mittels Reflexionsspektroskopie im Wellenlängenbereich von 400 nm bis 2500 nm vermessen. Die Messgrößen in Form der Absorptionswerte bei bestimmten Wellenlängen werden kalibriert und quantitativ nach dem Gehalt an Stickstoff und Kohlenstoff durch einen rechnerischen Vergleich der Werte aus den nasschemischen Analysen ausgewertet. Die ermittelten Beziehungsgrößen in Form von Gruppen- und Standardkalibrationen werden in der Folge für die Auswertung weiterer Probenmesswerte aus der Reflexionsspektroskopie oder Transmissionsspektroskopie im Wellenlängenbereich von 400 nm bis 2500 nm genutzt.

Auch die DE 100 55 821 A1 beschreibt ein Verfahren zur Ermittlung der Verfügbarkeit von Stickstoff und/oder Kohlenstoff in Böden und von Erden, Sedimenten und Komposten für das Pflanzenwachstum zur Quantifizierung der Stickstoffdüngung.

Aus der JP 11 046609 A ist ein Adsorbens für die Adsorption von Ausscheidungen aus Kot und Urin von Tieren bzw. Menschen sowie zur Adsorption von Körperflüssigkeiten bekannt. Dieses besteht aus einer Mischung aus einem Polymer und einem porösen Adsorbens, das mit einem antimikrobiellen Agens vorimprägniert ist.

Die US 2002/0007686 A beschreibt einen Sammel- und Speicherbehälter für biologische Proben, der einfach in der Verwendung und hygienisch ist und der per Post verschickt werden kann. Dieser Behälter beinhaltet ein Trockenmaterial, um Stuhlproben, die darin aufbewahrt werden, zu trocknen. Der Behälter umfasst zwei Kammern, nämlich die Probenkammer selbst und eine Trockenkammer, wobei diese beiden Kammern zum Austausch von Gasen miteinander in Verbindung stehen.

Die Gewinnung von Methangas oder Biogas zur Energieerzeugung gewinnt immer mehr an Bedeutung. Als Gärsubstrat werden feste und flüssige biogene Abfallstoffe in der Regel aus der Industrie, aus dem Gewerbe, aus der Landwirtschaft, aus Haushalten und aus Abwasserreinigungsanlagen eingesetzt. Die Biogasgewinnung erfolgt anaerob in einem Fermenter unter kontrollierten Bedingungen bei etwa 30°C bis 40°C oder 50°C bis 57°C und basiert auf der Vergärung oder - bei Abfall aus der Landwirtschaft bevorzugt - Co-Vergärung. Das Gärsubstrat wird mithilfe von Methanbakterien stufenweise, in im Wesentlichen vier Phasen, unter Bildung von im Großen und Ganzen Methan, Kohlendioxid und Wasser abgebaut (etwa 2/3 Methan, etwa 1/3 Kohlendioxid und Restgase). Die typischerweise am Gärungsprozess teilhabenden Bakterien sind beispielsweise Arten der Gattungen Clostridia, Bacteroides, Bacillus, Acetobacterium, Acetomonas, Peptostreptococcus, Methanotrix, Methanobacterium, Methanosarcina etc. Sie werden dem Gärsubstrat im Fermenter als so genanntes Impfmaterial zugegeben. Eine zufriedenstellende Vergärung wird bei einem pH-Wert zwischen 6,5 bis 8, am günstigsten im engeren Bereich von 7 erreicht. Von Wichtigkeit ist das Nährstoffverhältnis, nämlich das Verhältnis (CNP-Verhältnis) von Kohlenstoff, Stickstoff, Phosphor, aber auch Spurenelemente. Das CNP-Verhältnis ist günstigerweise etwa bei C:N 10 bis 16:1 und N:P 7:1 zu halten. Durch vielfältige Störungen im biologischen Prozessablauf können sich die Methangasbakterien nicht in gewünschter Weise vermehren, wodurch die Reaktionen zur Bildung des Methans nur gehemmt bzw. verzögernd ablaufen können. Insbesondere betreffen dies die gelösten Stoffe, wie Stickstoffverbindungen und flüchtige Fettsäuren. Wenn diese im Übermaß im Gärsubstrat vorhanden sind, wirken sie für die Methanbakterien toxisch. Oftmals fällt der pH-Wert in den sauren Bereich und es folgt ein Anstieg an undissoziierten Fettsäuren, wie z.B. Essigsäure, Buttersäure, Propionsäure, Valeriansäure, etc. Die Gasproduktion sinkt ab, der Gehalt an Kohlendioxid steigt und es kommt zur Schaumbildung. Diese genannten Störungen führen zu einer Minderung der Bio-Energieerzeugung. Um Störungen möglichst zu vermeiden, bzw. um ihnen zeitgerecht entgegentreten zu können, empfiehlt es sich, in regelmäßigen Abständen von wenigen Tagen (üblicherweise ein bis zwei Wochen) chemische Analysen von Proben des Gärproduktes aus dem biologischen Reaktor vorzunehmen. Die vergorenen Gärprodukte können nach der Biogaserzeugung als hochwertige Dün-ger auf landwirtschaftliche Flächen ausgebracht werden, wenn die Gehalte an Nährstoffen bekannt sind und die Ausbringung an diese angepasst entsprechend den Vorschriften vorgenommen wird. Insbesondere erlaubt die Messung der quantitativen Gehalte an Trockensubstanz, Glühverlust, Gesamtstickstoff, Ammonium und flüchtigen Fettsäuren in Verbindung mit der Messung von Temperatur und pH-Wert bereits eine Beurteilung des Gärzustandes und der Aktivität der am Umsetzungsprozess beteiligten Mikroorganismen sowie des Düngewertes der vergorenen Gärprodukte wie dies in Pind P.F., Angelidaki I., Ahring B.K., Stamatelatou K., Lyberatos G., Monitoring and Control of Anaerobic Reactors, Adv Biochem Engin/Biotechnol 82, 135-182, 2003, beschrieben ist. Die Messung dieser Parameter in der Praxis erfolgt derzeit nach aufwändigen nasschemischen Verfahren in dafür geeigneten Laboratorien.

Die Trockensubstanz ist die nach dem festgelegten Trocknungsverfahren erhaltene Masse an fester Substanz. In der Flüssigfermentation variiert die Trockensubstanz zwischen 3 und 150 g/kg Inputmaterial und nimmt während der Fermentation durch den Abbau organischer Substanz ab. Nach der Vorschrift EN 12880 S 2a werden zur Ermittlung der Trockensubstanz Schlammproben in einem Trockenschrank bei 105°C für 12 Stunden getrocknet.

Als Glühverlust bezeichnet man den durch das Glühen der Trockenmasse eines Schlammes oder Sedimentes unter bestimmten Bedingungen als Gas entweichenden Massenanteil. Er ist eine der wichtigsten Prozessgrößen der Biogasgewinnung, da er unter Berücksichtigung der Substratart eine Aussage über die zu erwartende Biogasausbeute erlaubt. Bei Biogassubstraten sind Glühverluste zwischen 50 und 98% zu erwarten, die je nach Vergärbarkeit in der Fermentation durch Abbau reduziert werden. Gemäß DIN 38414 S 3 wird zur Ermittlung des Glühverlustes die Trockenmasse einer Probe 3,5 Stunden bei 550°C im Glühofen geglüht.

Gesamt-Stickstoff ist die Massenkonzentration an organisch gebundenem Stickstoff und Ammoniumstickstoff in einer Probe. Ein hoher Gehalt an Gesamt-Stickstoff über 3 g/kg Substrat führt zu Inhibitionen des Gärprozesses durch gelöstes Ammoniak, ein zu niedriger Gehalt limitiert das Wachstum der Mikroorganismen. Gemäß der Vorschrift EN 25663 H 11 werden zur Ermittlung des Gesamtstickstoffes die Analysenproben in stark schwefelsaurer Lösung bei hoher Temperatur unter Zusatz von Selenreaktionsgemisch katalytisch aufgeschlossen und der organisch gebundene reduzierte Stickstoff in Ammonium überführt. Durch nachfolgende Wasserdampfdestillation wird das Ammonium in eine Borsäurevorlage überführt und sein Gehalt titrimetrisch bestimmt. Die Bestimmung des Ammoniums erfolgt analog zur Bestimmung des Gesamtstickstoffes ohne Aufschluss der Proben.

Die flüchtigen Fettsäuren werden mittels Gaschromatographie und Flammenionisationsdetektion bestimmt.

Alle diese genannten Analysen sind entweder zeitraubend oder sehr aufwändig. Darüber hinaus verlangt die Durchführung nach qualifiziertem Laborpersonal.

Klärschlamm als Abprodukt der Siedlungswasserwirtschaft verursacht je nach Zusammensetzung und Schadstoffgehalt zunehmend hohe Kosten bei der Entsorgung. Ein gewisser Anteil kann aber in der Landwirtschaft als Dünger nutzbringend eingesetzt werden. In diesen Fällen ist die Kenntnis der Nährstoffgehalte von Vorteil, da eine gezielte Ausbringung dadurch möglich wird. Derzeit werden diese Parameter mit der gleichen Verfahrensweise wie oben beschrieben, ermittelt.

Besonders hervorzuheben ist, dass beim derzeitigen Stand der Technik die Konservierung von flüssigen eutrophen Stoffen wie Gülle, Gärprodukte aus der Biogaserzeugung und Klärschlamm für die chemische Analyse im Großen und Ganzen durch Tiefkühlung bei Temperaturen unter -20°C erfolgt und dadurch der Probentransport erschwert wird.

Aufgabe der Erfindung ist es, ein Verfahren zu gestalten, welches eine durchgehende Verfahrenslinie aufeinander abgestimmter Verfahrensschritte mit einer einfachen, durchführbaren Entnahme von Proben aus der Tierhaltung, aus Güllegruben, biologischen Reaktoren zur anaeroben Vergärung und aus Schlammbehältern, einer Konservierung bzw. Stabilisierung erlaubt. Es ist weiters eine Teilaufgabe der Erfindung, eine Möglichkeit zu schaffen, um die Umweltprobleme, die durch eutrophe Stoffe auftreten können, zu reduzieren.

Diese Aufgabe der Erfindung wird durch das erfindungsgemäße Verfahren gelöst, welches folgende Schritte umfasst:
A) Vorverpackung eines flüssigkeitsbindenden Trägermaterials in ein einfach verschließbares Behältnis, insbesondere eine Versandtasche, aus Kunststoff und/oder Metall und/oder Glas, und versenden des Behältnisses mittels normaler Post oder eines Kurierdienstes
B) Probenahme durch, insbesondere hygienische, Abfüllung einer vorbestimmbaren Menge bzw. vorbestimmbaren Volumens des flüssigen eutrophen Stoffes mittels eines vorgefertigten Maßgefäßes in das Behältnis, wobei der gesamte Stoff vom Trägermaterial adsorbiert wird und dieser so in einen feuchten Zustand übergeführt wird, wonach das Behältnis so verschlossen wird, dass ein Entweichen der festen oder gasförmigen Bestandteile des Stoffes verhindert und ein hygienischer Transport ermöglicht wird,
C) Verbringen des Behältnisses in ein Labor, insbesondere mittels Postversand,
D) Bestimmung des Bruttogewichtes als Probenvorbereitung und Entnahme einer definierten Mischung aus Trägermaterial und Stoff aus dem Behältnis zur Bestimmung der Trockensubstanz und Trocknung der Restmenge,
E) Einbringen dieser im pulverisierten Zustand oder als Pressling in ein Messgerät zur Reflexionsspektroskopie,
F) Messung der reflexionsspektroskopischen Absorption von elektromagnetischer Strahlung im Bereich der Wellenlängen von 400 nm bis 2500 nm im Messgerät,
G) Ermittlung aus den gemessenen Absorptionswerten einer Einzelprobe durch statistischen Vergleich verschiedener Absorptionsbanden bei bestimmten Wellenlängen mit den spektralen Messergebnissen einer Gruppe von Proben ähnlicher chemischer Zusammensetzung mittels bekannter multivariater Berechnungsmethoden den quantitativen Gehalt an organisch gebundenem Stickstoff, an Ammonium-Stickstoff, an Gesamtkohlenstoff, an organischen Säuren sowie an chemischem Sauerstoffbedarf, an organischer und anorganischer Substanz und an Faserstoffen,
H) Berichterstellung und Ergebnisübermittlung.

Weiters wird die Aufgabe gelöst durch das Verfahren zur Steuerung und/oder Regelung von Biogasanlagen gemäβ Anspruch 22.

Von Vorteil ist dabei, dass die Probenahme und der Transport der Probe zum Analysenlabor hygienische und damit das Analyseverfahren zeitsparend gestaltet werden kann. Es ist mit der adsorbierten Probe auch eine zeitsparend durchführbare Probenvorbereitung möglich. Von Vorteil bei dem erfindungsgemäßen Verfahren ist weiters, dass die chemische Analyse ohne die Inanspruchnahme zeitaufwendiger nasschemischer und/oder chromatografischer Analysenmethoden erfolgt und ohne die Nachteile von anderen spektroskopischen Verfahren in Flüssigzellen. Durch die für die notwendigen Teilschritte einer chemischen Beurteilung aufeinander abgestimmten, zeitsparende Verfahrensschritte, die im Praxiseinsatz mit einem geringen Aufwand an nasschemischen Labormethoden auskommen und unter hygienischen Bedingungen rasch und mit geringst möglicher Geruchsbelästigung zuverlässig erfolgen ist eine rasche analytische Beurteilung von Gülle, des Gärzustandes der Vergärung im biologischen Reaktor, der Gärprodukte von Biogasprozessen und von Klärschlamm durch Auswertung der durchgeführten physikochemischen Analyse möglich. Es ist damit auch eine rasche und zuverlässige Beurteilung von eutrophen pastösen oder flüssigen Stoffen gemäß den oben genannten Parametern möglich, wodurch die Tierfütterung und Düngung optimiert und schnell auf eventuelle Störungen bei Biogasprozessen reagiert werden kann. Die kurze Zeitspanne zwischen Probenahme und Auswertung der Ergebnisse ermöglicht eine schnelle Bewertung des chemischen Zustandes der Proben.

Mit dem flüssigkeitsbindenden Trägermaterial können Fehler und Ungenauigkeiten bei der Probenahme durch den Einsatz eines standardisierten simplen Probenahmeverfahrens, das einfach und von jeder fachlich nicht versierten Person durchführbar ist, vermieden werden. Es ist damit auch die Vermeidung von Fehlern und Ungenauigkeiten und die Vermeidung des Hantierens mit gefährlichen chemischen Substanzen bei der Probenkonservierung, ein hygienischer und zeitsparende Versand zum Analytiklabor, eine zeitsparend und simpel durchführbare Probenvorbereitung im Analytiklabor, sowie eine zeitsparende Auswertung und Beurteilung der Messergebnisse durch Anwendung von automatisierbaren statistischen Verfahren möglich.

Weitere vorteilhafte Ausführungsvarianten der Erfindung sind in den jeweils abhängigen Ansprüchen gekennzeichnet.

So kann für die Auswertung und Beurteilung der spektralen Messergebnisse eine Matrix von Analysendaten chemisch ähnlich zusammengesetzter Proben herangezogen werden um die Durchlaufzeiten der Proben verkürzen, insbesondere deren Bewertung zu vereinfachen.

Für eine zeitsparende Bewertung der Nährstoffgehalte und/oder des Gärzustandes von Proben wie Gülle, Klärschlamm, Biogassubstrate und Biogasprodukte kann für die rechnerische Auswertung der Messergebnisse ein Prognosemodell erstellt werden.

Als flüssigkeitsbindendes Material kann pulverförmiges bzw. feinkörniges Zeolithmineral oder ein anderer anorganischer respektive organischer Träger eingesetzt werden. Insbesondere Zeolithe werden aufgrund ihrer Kanalstruktur und der guten Adsorbereigenschaften bevorzugt.

Neben der Verwendung von zeolithischen Material besteht auch die Möglichkeit, dass die Partikel des flüssigkeitsbindenden Materials oder Adsorbens aus einem Nanosilikat oder einem Nanoaluminat oder aus Kieselgur oder aus Mischungen daraus bestehen, da diese zu Zeolithen sehr ähnliche Eigenschaften hinsichtlich ihres Adsorptionsverhaltens zeigen. Unter Nanosilikaten bzw. Nanoaluminaten werden dabei im Sinne der Erfindungen Silikate, Aluminate und Aluminiumsilikate verstanden, die nanoporös bzw. mesoporös (Aluminiumsilikate) ausgebildet sind.

Das zeolithische Material kann ein natürlicher Zeolith oder ein Gemisch aus natürlichen Zeolithen sein, wodurch deren hydophile Eigenschaften ohne besondere Vorkonditionierung ausgenutzt werden können. Daneben handelt es sich dabei um Stoffe, die zumindest weitgehend unbedenklich für die Umwelt sind.

Bevorzugt ist der natürliche Zeolith ein Faserzeolith, insbesondere ausgewählt aus einer Gruppe umfassend Natrolith, Skolezit, Thomsonit, Laumontit, Mordenit oder ein Blätterzeolith, insbesondere ausgewählt aus einer Gruppe umfassend Heulandit, Stilbit, Phillipsit, Harmotom, Klinoptilolith, oder ein Würfelzeolith, insbesondere ausgewählt aus einer Gruppe umfassend Chabasit, Levyn, Analcim, ist oder Mischungen daraus.

Das Adsorbens weist bevorzugt einen Gehalt an Zeolith auf, der ausgewählt ist aus einem Bereich mit einer unteren Grenze von 30 % und einer oberen Grenze von 95 %, bzw. gemäß einer weiteren Ausführungsvariante mit einer unteren Grenze von 50 % und einer oberen Grenze von 90 %. Der Rest kann beispielsweise durch Quarz oder andere Gangarten gebildet sein. Durch derartige Gehalte kann eine hohe Effektivität des Adsorbens erreicht werden.

Durch Partikel mit einer mittlere Größe, die ausgewählt ist aus einem Bereich mit einer unteren Grenze von 0,1 mm und einer oberen Grenze von 2 mm bzw. ausgewählt ist aus einem Bereich mit einer unteren Grenze von 0,3 mm und einer oberen Grenze von 1 mm wird ein hohes Adsorptionsvermögen erreicht.

Zur Erhöhung der Adsorberkapazität, und um damit das Gesamtvolumen Probe mit Adsorbens gering zu halten - es ist damit auch die Lagerung von Rückstellproben einfacher - ist es von Vorteil wenn die Partikel eine Oberfläche pro Gramm aufweisen, die ausgewählt ist aus einem Bereich mit einer unteren Grenze von 300 m² und einer oberen Grenze von 1000 m², bzw. die ausgewählt ist aus einem Bereich mit einer unteren Grenze von 400 m² und einer oberen Grenze von 800 m², bzw. die ausgewählt ist aus einem Bereich mit einer unteren Grenze von 500 m² und einer oberen Grenze von 600 m². unter der Oberfläche ist dabei im Sinne der Erfindung die innere Oberfläche gemeint, gemessen nach der BET-Methode mit Stickstoff bzw. Helium als Adsorptiv.

Um die Beladung des Adsorbens mit einem eutrophen Stoff auch für ungeschultes Personal einfach zu ermöglichen - die Probenahme kann beispielsweise auch durch einen Landwirt erfolgen - und damit die Fehlerquote weiter zu senken, können die Partikel eine helle Farbe, insbesondere weiß, aufweisen, die bei Beladung mit dem eutrophen Stoff in eine dunkele Farbe wechselt.

Die Partikel des Adsorbens, inbesondere des zeolithischen Materials, können mit Kationen dotiert sein, insbesondere mit Silberkationen und/oder Kupferkationen und/oder organische Kationen, wie z.B. quartemäre Amine: Weiters ist es möglich, dass zumindest die innere Oberfläche der Partikel, insbesondere des zeolithischen Materials, zumindest teilweise adsorptiv mit zumindest einem organischen Polymer modifiziert ist. Dadurch lassen sich für das Verfahren nützliche Eigenschaften, wie z.B. selektive Adsorption von bestimmten chmischen Stoffgruppen oder aber bakteriostatische bzw. bakterizide Wirkungen des Trägermaterials erreichen.

Die Partikel des Adsorbens, insbesondere des zeolithischen Materials, können dabei eine Kationenaustauschkapazität aufweisen ausgewählt aus einem Bereich mit einer unteren Grenze von 0,5 Milligrammäquivalten / Gramm und einer oberen Grenze von 5,3 Milligrammäquivalten / Gramm, bzw. ausgewählt aus einem Bereich mit einer unteren Grenze von 1,0 Milligrammäquivalten / Gramm und einer oberen Grenze von 2,7 Milligrammäquivalten / Gramm, bzw. ausgewählt aus einem Bereich mit einer unteren Grenze von 1,7 Milligrammäquivalten / Gramm und einer oberen Grenze von 2,2 Milligrammäquivalten /Gramm.

Das Behältnis ist aus Kunststoff und/oder Metall und/oder Glas gebildet um den unterschiedlichen Proben Rechnung zu tragen. Insbesondere bei problematischen Substanzen empfiehlt es sich, das Behältnis bruchsicher, z.B. aus Metall, auszubilden. Durch die Verwendung von Kunststoffen kann das Transportgewicht reduziert werden.

Von Vorteil ist es auch, wenn das Behältnis als Mehrwegverpackung wieder verwendet werden kann.

Es ist auch möglich, das Behältnis als Versandtasche auszubilden, wodurch keine weiteren Aufwendungen für das Einsenden der Proben an das Labor erforderlich sind.

Zum besseren Verständnis wird die Erfindung im folgenden anhand von Beispielen und Fig. näher erläutert.

Es zeigen zum Teil in schematischer Vereinfachung:
- Fig. 1: ein Flussdiagramm der zeitlichen Abfolge der einzelnen Verfahrensschritte;
- Fig.2a: eine Kalibrationskurve von Ammonium nach diesem Verfahren;
- Fig. 2b: eine Kalibrationskurve von Gesamtstickstoff nach diesem Verfahren;
- Fig. 2c: die spektroskopische Analyse von 5 unbekannten Gärprodukten der Biogasgewinnung und die Überprüfung durch nassanalytische Messung für den Parameter Ammonium; Fig. 2d die spektroskopische Analyse von 5 unbekannten Gärprodukten der Biogasgewinnung und die Überprüfung durch nassanalytische Messung für den Parameter Gesamtstickstoff.

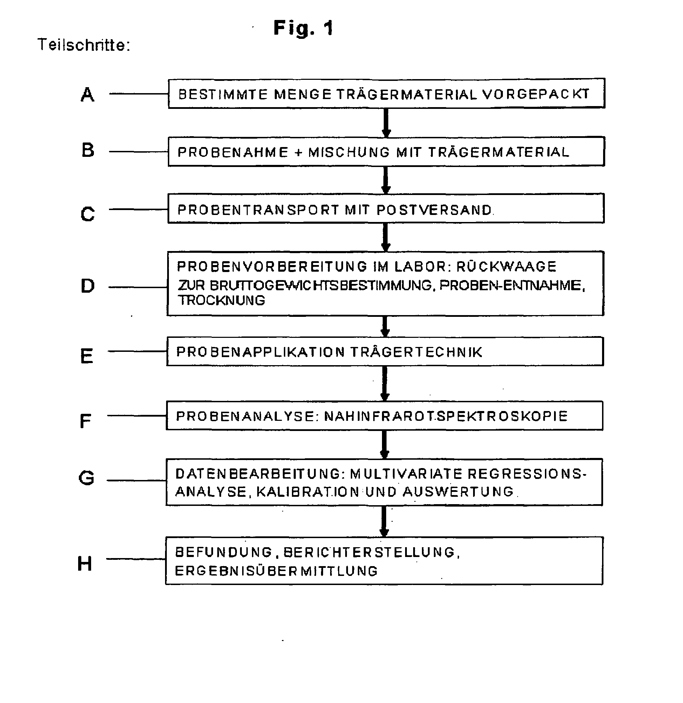

In Fig. 1 ist ein Verfahrensschema der Schnellanalytik von eutrophen Stoffen, wie tierischen Exkrementen, Gülle, Gärprodukten der Biogasgewinnung und Klärschlamm für den Praxiseinsatz gezeigt. Die Verfahrensschritte sind nach ihrem zeitlichen Ablauf alphabetisch in die Schritte A - H eingeteilt.

In Schritt A wird vom Analysenlabor eine bestimmte Menge Trägermaterial, d.h. Adsorbens in ein verschließbares Behältnis, insbesondere Kunststoffsäcke vorgepackt und dieses an den Ort der Probenahme übermittelt. Anstelle von Kunststoffsäcken kann gegebenenfalls auch ein Behältnis aus Glas oder Metall, wobei auch Kombinationen der genannten Werkstoffe möglich sind, verwendet werden. Daneben ist es möglich, die Art der hygienischen Ver-schließung des Behältnisse unterschiedlich zu gestalten, beispielsweise mittels Klebeverschluss - das erfindungsgemäße Adsorbens ermöglicht unter Umständen auch eine Geruchsbindung - oder mittels Schraubverschluss oder Klettverschluss oder dgl.

Die Versendung des Probeentnahmebehältnisses erfolgt bevorzugt mittels normaler Post, es können aber auch Kurierdienste oder dgl. in Anspruch genommen werden.

Im Schritt B erfolgen die Probenahme und Abfüllung der Probe in die Kunststoffsäcke bei gleichzeitiger Konservierung der Probe durch Mischung mit dem Trägermaterial.

Schritt C kennzeichnet den Postversand der mit der Mischung befüllten Kunststoffsäcke zum Analysenlabor.

Die im Analysenlabor angekommenen Kunststoffsäcke werden im Schritt D rückgewogen und das Bruttogewicht bestimmt sowie anschließend schonend bei 55 ° C getrocknet. Die Temperatur kann selbstverständlich bei Bedarf auch anders gewählt werden, beispielsweise ausgewählt aus einem Bereich mit einer unteren Grenze von 40 °C und einer oberen Grenze von 75 °C.

Im Schritt E erfolgt die Vorbereitung der Probenmischung für die Messung.

Im Schritt F erfolgt die Vermessung der vorbereiteten Probenmischung durch Nahinfrarot-spektroskopie

Im Schritt G erfolgt die Datenbearbeitung mit multivariater Datenanalyse, Kalibration und Auswertung der vermessenen Probenmischung.

Im Schritt H erfolgt die Befundung, Berichterstellung, Ergebnisübermittlung und Qualitätssicherung.

### Beispiel 1:

Verfahren zur Bestimmung von Ammonium und Gesamtstickstoff in Gärprodukten der Biogasgewinnung

Das Gemisch aus 20,00 g Trägermaterial, beispielsweise Zeolith in der Körnung von 0,3-1,0 mm und 20 ml Gärprodukt der Biogasgewinnung wird zur Bestimmung des Bruttogewichts gewogen und vor der Trocknung im Temperaturbereich von 75 °C im Umlufttrockenschrank eine Probenmenge von 5 g entnommen, um das Trockengewicht des Gärprodukts nach **DIN 38414** zu bestimmen. Nach dem Erkalten wird die behandelte Probe durch Verrühren im Becherglas in einen homogenen Zustand übergeführt. Das nunmehr rieselfähige Material wird in eine Messzelle eingebracht und im Spektrometer im Wellenlängenbereich von 1100 nm bis 2500 nm vermessen.

Auf diese Weise werden 40 Proben bearbeitet, von denen die Gehalte an Ammonium und Gesamtstickstoff mittels klassischer naßanalytischer Methoden als Referenzwerte bestimmt wurden. Mit diesen Werten wird mit Hilfe eines EDV-Programms zur multivariaten Datenanalyse ein multiples Korrelationsmodell erstellt.

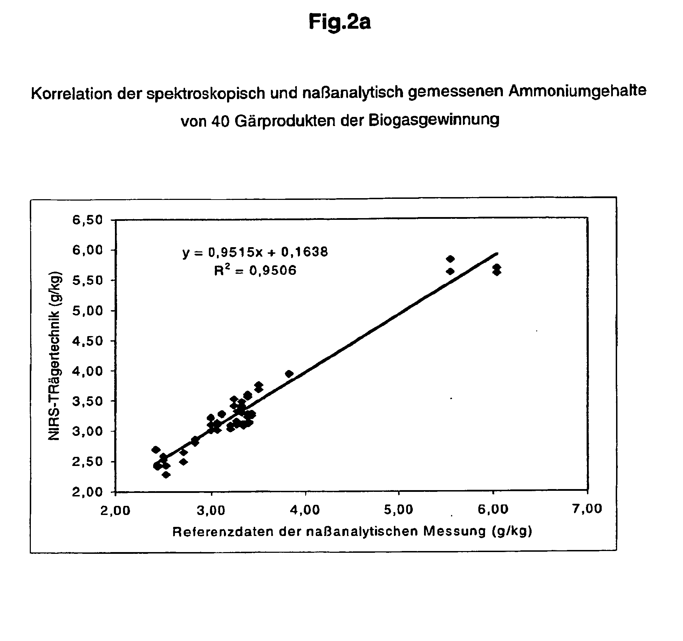

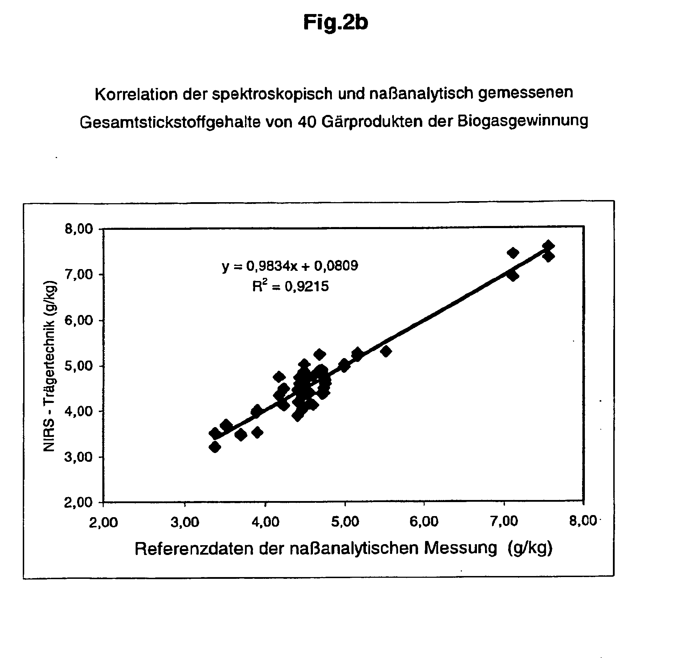

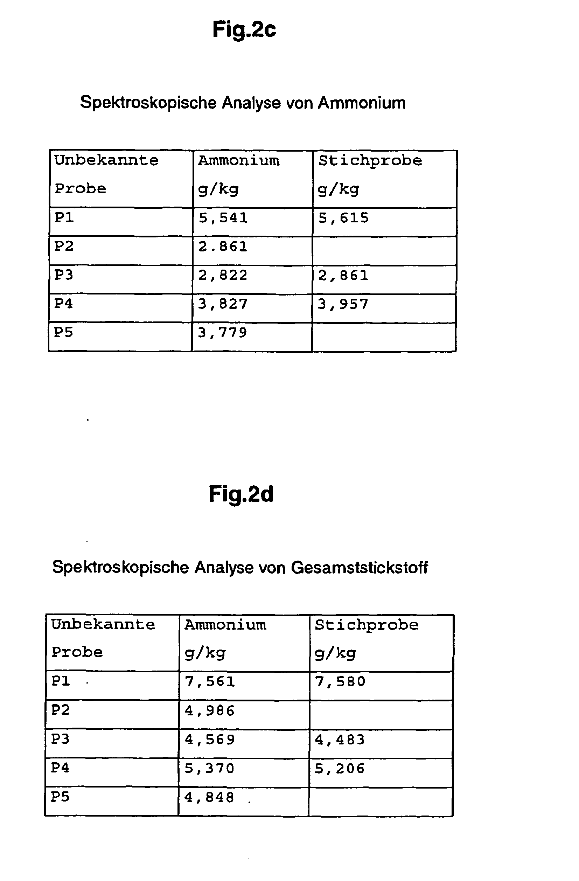

Anhand der Korrelationen von spektroskopisch (NIRS-Trägertechnik) und nassanalytisch gemessenen Werten (Fig. 2a u. 2b) und weiteren statistischen, programmspezifischen Kennzahlen kann erkannt werden, dass dieses Modell für eine Serienanalyse von Ammonium und Gesamtstickstoff von gleich vorbehandelten Proben der gleichen Art Anwendung finden kann.

Dieses Modell ist beispielsweise zur Prognose für die Parameter Ammonium und Gesamtstickstoff geeignet.

Zur Demonstration wurden 5 unbekannte Proben P1 - P5 der gleichen Art wie angeführt vorbehandelt und spektroskopisch vermessen und mit dem zuvor erstellten Kalibrationsmodell verrechnet und die Ergebnisse lt. Fig. 2c u. 2d erhalten. Zur Überprüfung des Modells wurden von den Proben P1 - P5 3 Stichproben (P1, P3, P4) auch konventionell analysiert (Spalte 3 in Fig. 2c u. 2d).

## Patentansprüche

1. Verfahren zur Schnellanalytik von pastösen und flüssigen eutrophen Stoffen, wie tierische Exkremente, Gülle, Gärprodukte der Biogasgewinnung oder Klärschlamm, umfassend die Schritte:
A) Vorverpackung eines flüssigkeitsbindenden Trägermaterials in ein einfach verschließbares Behältnis, insbesondere eine Versandtasche, aus Kunststoff und/oder Metall und/oder Glas, und Versenden des Behältnisses mittels normaler Post oder eines Kurierdienstes an den Ort der Probenahme,
B) Probenahme durch, insbesondere hygienische, Abfüllung einer vorbestimmbaren Menge bzw. vorbestimmbaren Volumens des flüssigen eutrophen Stoffes mittels eines vorgefertigten Maßgefäßes in das Behältnis, wobei der gesamte Stoff vom Trägermaterial adsorbiert wird und dieser so in einen feuchten Zustand übergeführt wird, wonach das Behältnis so verschlossen wird, dass ein Entweichen der festen oder gasförmigen Bestandteile des Stoffes verhindert und ein hygienischer Transport ermöglicht wird,
C) Verbringen des Behältnisses in ein Labor, insbesondere mittels Postversand,
D) Bestimmung des Bruttogewichtes als Probenvorbereitung und Entnahme einer definierten Mischung aus Trägermaterial und Stoff aus dem Behältnis zur Bestimmung der Trockensubstanz und Trocknung der Restmenge,
E) Einbringen dieser im pulverisierten Zustand oder als Pressling in ein Messgerät zur Reflexionsspektroskopie,
F) Messung der reflexionsspektroskopischen Absorption von elektromagnetischer Strahlung im Bereich der Wellenlängen von 400 nm bis 2500 nm im Messgerät,
G) Ermittlung aus den gemessenen Absorptionswerten einer Einzelprobe durch statistischen Vergleich verschiedener Absorptionsbanden bei bestimmten Wellenlängen mit den spektralen Messergebnissen einer Gruppe von Proben ähnlicher chemischer Zusammensetzung mittels bekannter multivariater Berechnungsmethoden den quantitativen Gehalt an organisch gebundenem Stickstoff, an Ammonium-Stickstoff, an Gesamtkohlenstoff, an organischen Säuren sowie an chemischem Sauerstoffbedarf, an organischer und anorganischer Substanz und an Faserstoffen,
H) Berichterstellung und Ergebnisübermittlung.

2. Verfahren nach Anspruch 1, **dadurch gekennzeichnet, dass** als Trägermaterial ein pulvelförmig gemahlenes zeolithisches Mineral und/oder ein anderer anorganischer respektive organischer Träger oder Mischungen daraus eingesetzt werden.

3. Verfahren nach Anspruch 1 bis 2, **dadurch gekennzeichnet, dass** für die Auswertung und Beurteilung der spektralen Messergebnisse eine Matrix von Analysendaten chemisch ähnlich zusammengesetzter Proben herangezogen wird.

4. Verfahren nach einem der Ansprüche 1 bis 3, **dadurch gekennzeichnet, dass** für die rechnerische Auswertung der Messergebnisse ein Prognosemodell für eine zeitsparende Bewertung der Nährstoffgehalte und/oder des Gärzustandes von Proben wie Gülle, Klärschlamm, Biogassubstrate und Biogasprodukte erstellt wird.

5. Verfahren nach Anspruch 1, **dadurch gekennzeichnet, dass** als Trägermaterial ein aus Partikel bestehendes Adsorbens verwendet wird, wobei die Partikel eine mittlere Gröβe aufweisen, die ausgewählt ist aus einem Bereich mit einer unteren Grenze von 0,02 mm und einer oberen Grenze von 2 mm.

6. Verfahren nach Anspruch 5, **dadurch gekennzeichnet, dass** die Partikel eine mittlere Größe aufweisen, die ausgewählt ist aus einem Bereich mit einer unteren Grenze von 0,3 mm und einer oberen Grenze von 1 mm.

7. Verfahren nach Anspruch 5 oder 6, **dadurch gekennzeichnet, dass** die Partikel aus einem zeolithischen Material oder einem Nanosilikat oder einem Nanoaluminat oder aus Kieselgur oder aus Mischungen daraus bestehen.

8. Verfahren nach Anspruch 7, **dadurch gekennzeichnet, dass** das zeolithische Material ein natürlicher Zeolith oder ein Gemisch aus natürlichen Zeolithen ist.

9. Verfahren nach Anspruch 8, **dadurch gekennzeichnet, dass** der natürliche Zeolith ein Faserzeolith, insbesondere ausgewählt aus einer Gruppe umfassend Natrolith, Skolezit, Thomsonit, Laumontit, Mordenit, oder ein Blätterzeolith, insbesondere ausgewählt aus einer Gruppe umfassend Heulandit, Stilbit, Phillipsit, Harmotom, Klinoptilolith, oder ein Würfelzeolith, insbesondere ausgewählt aus einer Gruppe umfassend Chabasit, Levyn, Analcim, ist oder Mischungen daraus.

10. Verfahren nach Anspruch 8 oder 9, **dadurch gekennzeichnet, dass** der natürliche Zeolith, insbesondere ein Klinoptilolith, eine Gehalt an Zeolith aufweist, ausgewählt aus einem Bereich mit einer unteren Grenze von 30 % und einer oberen Grenze von 95 %.

11. Verfahren nach Anspruch 8 oder 9, **dadurch gekennzeichnet, dass** der natürliche Zeolith, insbesondere ein Klinoptilolith, eine Gehalt an Zeolith aufweist, ausgewählt aus einem Bereich mit einer unteren Grenze von 50 % und einer oberen Grenze von 90 %.

12. Verfahren nach einem der Ansprüche 5 bis 11, **dadurch gekennzeichnet, dass** das die Partikel eine Oberfläche pro Gramm aufweisen, die ausgewählt ist aus einem Bereich mit einer unteren Grenze von 300 m² und einer oberen Grenze von 1000 m².

13. Verfahren nach einem der Ansprüche 5 bis 11, **dadurch gekennzeichnet, dass** das die Partikel eine Oberfläche pro Gramm aufweisen, die ausgewählt ist aus einem Bereich mit einer unteren Grenze von 400 m² und einer oberen Grenze von 800 m².

14. Verfahren nach einem der Ansprüche 5 bis 11, **dadurch gekennzeichnet, dass** das die Partikel eine Oberfläche pro Gramm aufweisen, die ausgewählt ist aus einem Bereich mit einer unteren Grenze von 500 m² und einer oberen Grenze von 600 m².

15. Verfahren nach einem der Ansprüche 5 bis 14, **dadurch gekennzeichnet, dass** die Partikel eine helle Farbe, insbesondere weiß, aufweisen, die bei Beladung mit dem eutrophen Stoff in eine dunkele Farbe wechselt.

16. Verfahren nach einem der Ansprüche 5 bis 15, **dadurch gekennzeichnet, dass** die Partikel, inbesondere das zeolithische Material, mit Kationen dotiert sind.

17. Verfahren nach Anspruch 16, **dadurch gekennzeichnet, dass** die Kationen durch Silberkationen und/oder Kupferkationen und/oder organische Kationen, wie z.B. quarternäre Amine, gebildet sind.

18. Verfahren nach einem der Ansprüche 5 bis 15, **dadurch gekennzeichnet, dass** die Partikel, insbesondere das zeolithische Material, eine Kationenaustauschkapazität aufweisen ausgewählt aus einem Bereich mit einer unteren Grenze von 0,5 Milligrammäquivalten / Gramm und einer oberen Grenze von 5,3 Milligrammäquivalten / Gramm.

19. Verfahren nach einem der Ansprüche 5 bis 15, **dadurch gekennzeichnet, dass** die Partikel, insbesondere das zeolithische Material, eine Kationenaustauschkapazität aufweisen ausgewählt aus einem Bereich mit einer unteren Grenze von 1,0 Milligrammäquivalten / Gramm und einer oberen Grenze von 2,7 Milligrammäquivalten / Gramm.

20. Verfahren nach einem der Ansprüche 5 bis 15, **dadurch gekennzeichnet, dass** die Partikel, insbesondere das zeolithische Material, eine Kationenaustauschkapazität aufweisen ausgewählt aus einem Bereich mit einer unteren Grenze von 1,7 Milligrammäquivalten / Gramm und einer oberen Grenze von 2,2 Milligrammäquivalten / Gramm.

21. Verfahren nach einem der Ansprüche 5 bis 20, **dadurch gekennzeichnet, dass** zumindest die innere Oberfläche der Partikel, insbesondere des zeolithischen Materials, zumindest teilweise adsorptiv mit zumindest einem organischen Polymer modifiziert ist.

22. Verfahren zur Steuerung und/oder Regelung von Biogasanlagen, nach dem in zeitlichen Abständen Proben von dem zu vergärenden Material gezogen und analysiert werden, **dadurch gekennzeichnet, dass** die Probenahme und Analyse nach einem Verfahren entsprechend einem der Ansprüche 1 bis 21 durchgeführt wird und mit den aus der Analyse erhaltenen Daten Regelparameter der Vergärung, insbesondere Druck, Temperatur und/oder Luftfeuchtigkeit, gegebenenfalls nachjustiert werden.

## Claims

1. Method for a rapid analytics of pasty and liquid eutrophic materials, such as animal excrements, slurry, fermentation products of the biogas generation or sewage sludge, comprising the steps:
A) Prepacking a liquid binding carrier material in an easily closeable container, in particular a dispatch bag made of synthetic material and/or metal and/or glass, and sending the container to the place of the sampling by regular post or a messenger service,
B) Collecting the sample by, in particular hygienic, packing a pre-definable amount or a pre-definable volume of the liquid eutrophic material by means of a prefabricated measuring vessel into the container, with the entire material being absorbed by the carrier material and the latter is thus converted into a moist state, whereupon the container is closed in such a way that the solid or gaseous components of the materials are prevented from escaping and an hygienic transport is allowed,
C) Shipping the container to the laboratory, in particular by means of postage,
D) Determining the gross weight for sample preparation and removing a defined mixture of carrier material and material from the container for determining the dry substance and drying the residual amount,
E) Placing the latter in pulverized condition or as a pellet in measuring device for a reflection spectroscopy,
F) Measuring the reflection spectroscopic absorption of electromagnetic radiation in a range between 400 nm and 250 nm in a measuring device,
G) Determining the quantitative content of organically bound nitrogen, ammonium nitrogen, total carbon, organic acids as well as of chemical oxygen demand, organic and inorganic substance and fibrous material on the basis of a measured absorption values of an individual sample by statistically compare different absorption bands at certain wave lengths with the spectral measurement results of a group of samples having similar chemical composition by means of known multivariate calculation methods,
H) Creating the report and transmission of results.

2. Method according to claim 1, **characterized in that** a powdery ground zeolitic mineral and/or another inorganic or organic carrier or mixtures thereof may be used.

3. Method according to claim 1 to 2, **characterized in that** a matrix of analysis date of chemically similar composited samples is consulted for analyzing and evaluating the spectral measurement results.

4. Method according to one of claims 1 to 3, **characterized in that** a forecast model for a timesaving evaluation of the nutrient contents and/or the fermentation state of samples such as slurry, sewage sludge, biogas substrates and biogas products is created for the calculative evaluation of the measurement results.

5. Method according to claim 1, **characterized in that** an adsorbent made of particles is used as carrier material, with the particles having a medium size selected from a range having a lower limit of 0.02 mm and an upper limit of 2 mm.

6. Method according to claim 5, **characterized in that** the particles have a medium size selected from a range having a lower limit of 0.3 mm and an upper limit of 1 mm.

7. Method according to claim 5 or 6, **characterized in that** the particles are made of a zeolitic material or a nano-silicate or a nano-aluminate or diatomite or mixtures thereof.

8. Method according to claim 7, **characterized in that** the zeolitic material is a natural zeolite or a mixture of natural zeolites.

9. Method according to claim 8, **characterized in that** the natural zeolite is a fibrous zeolite, in particular selected from a group comprising natrolite, scolecite, thomsonite, laumonite, mordenite or foliaceous zeolite, in particular selected from a group comprising heulandite, stilbite, phillipsite, harmotome, clinoptilite or a cubic zeolite, in particular selected from a group comprising chabazite, levyne, analcime or mixtures thereof.

10. Method according to claim 8 or 9, **characterized in that** the natural zeolite, in particular a clinoptilite, has a content of zeolite selected from a range having a lower limit of 30% and an upper limit of 95%.

11. Method according to claim 8 or 9, **characterized in that** the natural zeolite, in particular a clinoptilite, has a content of zeolite selected from a range having a lower limit of 50% and an upper limit of 90%.

12. Method according to one of claims 5 to 11, **characterized in that** the particles have a surface that is per gram selected from a range having a lower limit of 300 m² and an upper range of 1000 m^{2.}

13. Method according to one of claims 5 to 11, **characterized in that** the particles have a surface that is per gram selected from a range having a lower limit of 400 m² and an upper range of 800 m^{2.}

14. Method according to one of claims 5 to 11, **characterized in that** the particles have a surface that is per gram selected from a range having a lower limit of 500 m² and an upper range of 600 m^{2.}

15. Method according to one of claims 5 to 14, **characterized in that** the particles have a light color, in particular white, that changes the color to become darker when being charged with the eutrophic material.

16. Method according to one of claims 5 to 15, **characterized in that** the particles, in particular the zeolitic material, are doped with cations.

17. Method according to claim 16, **characterized in that** the cations are formed from silver cations and/or copper cations and/or organic cations, such as quaternary amines.

18. Method according to one of claims 5 to 15, **characterized in that** the particles, in particular the zeolitic material, have a cation exchange capacity selected from a range having a lower limit of 0.5 milligram equivalents /gram and an upper limit of 5.3 milligram equivalents / gram.

19. Method according to one of claims 5 to 15, **characterized in that** the particles, in particular the zeolitic material, have a cation exchange capacity selected from a range having a lower limit of 1.0 milligram equivalents /gram and an upper limit of 2.7 milligram equivalents / gram.

20. Method according to one of claims 5 to 15, **characterized in that** the particles, in particular the zeolitic material, have a cation exchange capacity selected from a range having a lower limit of 1.7 milligram equivalents /gram and an upper limit of 2.2 milligram equivalents / gram.

21. Method according to one of claims 5 to 20, **characterized in that** at least the interior surface of the particles, in particular of the zeolitic material, is at least partly modified in an adsorptive way with at least one organic polymer.

22. Method for open-loop control and/closed-loop control of biogas plants, according to which samples of the material to be fermented are collected and analyzed at time intervals, **characterized in that** the collection of sample and analysis is carried out according to a method according to one of claims 1 to 21 and the data obtained from the analysis are used to readjust the open-loop control parameters, in particular pressure, temperature and/or air moisture, if necessary.

## Revendications

1. Méthode d'analyse rapide de matériaux eutrophiques pâteux et liquides, tels que des excréments d'animaux, du lisier, des produits de fermentation de la production de biogaz ou des boues d'épuration, comprenant les étapes suivantes :
A) préemballage d'une substance de substrat liant les liquides dans un récipient facile à fermer, en particulier une pochette d' expédition, en plastique et/ou en métal et/ou en verre, et envoi du récipient à l'endroit de prélèvement d'un échantillon par courrier normal ou par un service de coursier ;
B) prélèvement d'un échantillon par soutirage, en particulier hygiénique, d'une quantité pouvant être prédéterminée ou d'un volume pouvant être prédéterminé du matériau eutrophique liquide au moyen d'un conteneur de mesure dans le récipient, étant entendu que le matériau est entièrement adsorbé par la substance de substrat et qu'il est ainsi transformé dans un état humide, après quoi le récipient est fermé de telle sorte qu'une fuite des composants solides ou gazeux du matériau est empêchée et qu'un transport hygiénique est possible ;
C) dépôt du récipient dans un laboratoire, en particulier par envoi postal ;
D) détermination du poids brut en tant que préparation de l'échantillon et prélèvement d'un mélange défini de substance de substrat et de matériau à partir du récipient aux fins de la détermination de la matière sèche et du séchage de la quantité résiduelle ;
E) introduction de cette quantité résiduelle dans un état pulvérisé ou sous forme comprimée dans un appareil de mesure aux fins d'une spectroscopie à réflexion ;
F) mesure de l'absorption spectroscopique à réflexion du rayonnement électromagnétique dans la zone des longueurs d'onde de 400 nm à 2500 nm dans l'appareil de mesure ;
G) calcul à partir des valeurs d'absorption mesurées d'un échantillon individuel, par comparaison statistique de différentes bandes d'absorption à des longueurs d'ondes déterminées avec les résultats de mesure spectraux d'un groupe d'échantillons d'une composition chimique similaire, au moyen de méthodes de calcul à variables multiples connues, de la teneur quantitative en azote organiquement lié, en azote ammoniacal, en carbone organique total, en acides organiques ainsi qu'en demande chimique en oxygène, en substances organiques et anorganiques et en matières fibreuses ;
H) tablissement d'un rapport et communication des résultats.

2. Méthode selon la revendication 1, **caractérisée en ce qu'**un minerai zéolitique moulu à l'état de poudre et/ou un autre substrat anorganique ou organique ou des mélanges de ceux-ci sont utilisés en tant que substance de substrat.

3. Méthode selon la revendication 1 ou 2, **caractérisée en ce qu'**une matrice de données d'analyse d'échantillons ayant une composition similaire sur le plan chimique est appliquée pour l'évaluation et le traitement des résultats de mesure spectraux.

4. Méthode selon l'une des revendications 1 à 3, **caractérisée en ce qu'**un modèle de prévision est élaboré pour l'évaluation arithmétique des résultats de mesure en vue d'une évaluation rapide des teneurs en substances nutritives et/ou de l'état de fermentation d'échantillons tels que du lisier, des boues d'épuration, des substrats de biogaz et des produits de biogaz.

5. Méthode selon la revendication 1, **caractérisée en ce qu'**un adsorbant constitué de particules est utilisé en tant que substance de substrat, étant entendu que les particules présentent une taille moyenne qui est choisie dans une marge allant d'une limite inférieure de 0,02 mm à une limite supérieure de 2 mm.

6. Méthode selon la revendication 5, **caractérisée en ce que** les particules présentent une taille moyenne qui est choisie dans une marge allant d'une limite inférieure de 0,3 mm à une limite supérieure de 1 mm.

7. Méthode selon la revendication 5 ou 6, **caractérisée en ce que** les particules sont constituées d'un matériau zéolitique ou d'un nano-silicate ou d'un nano-aluminate ou de diatomite ou de mélanges de ces substances.

8. Méthode selon la revendication 7, **caractérisée en ce que** le matériau zéolitique est une zéolithe naturelle ou un mélange de zéolithes naturelles.

9. Méthode selon la revendication 8, **caractérisée en ce que** la zéolithe naturelle est une zéolithe à filaments, en particulier choisie dans un groupe comprenant la natrolite, la scolécite, la thomsonite, la laumontite et la mordénite, ou une zéolithe à feuilles, en particulier choisie dans un groupe comprenant l'heulandite, la stilbite, la phillipsite, l'harmotome et la klinoptilolithe, ou une zéolithe à racines, en particulier choisie dans un groupe comprenant la chabasite, la levyne, l' analcime ou des mélanges de ces substances.

10. Méthode selon la revendication 8 ou 9, **caractérisée en ce que** la zéolithe naturelle, en particulier une klinoptilolithe, présente une teneur en zéolithe choisie dans une marge allant d'une limite inférieure de 30 % à une limite supérieure de 95 %.

11. Méthode selon la revendication 8 ou 9, **caractérisée en ce que** la zéolithe naturelle, en particulier une klinoptilolithe, présente une teneur en zéolithe choisie dans une marge allant d'une limite inférieure de 50 % à une limite supérieure de 90 %.

12. Méthode selon l'une des revendications 5 à 11, **caractérisée en ce que** les particules présentent une superficie par gramme qui est choisie dans une marge allant d'une limite inférieure de 300 m² à une limite supérieure de 1 000 m².

13. Méthode selon l'une des revendications 5 à 11, **caractérisée en ce que** les particules présentent une superficie par gramme qui est choisie dans une marge allant d'une limite inférieure de 400 m² à une limite supérieure de 800 m².

14. Méthode selon l'une des revendications 5 à 11, **caractérisée en ce que** les particules présentent une superficie par gramme qui est choisie dans une marge allant d'une limite inférieure de 500 m² à une limite supérieure de 600 m².

15. Méthode selon l'une des revendications 5 à 14, **caractérisée en ce que** les particules présentent une couleur claire, en particulier blanche, qui devient une couleur foncée lors du chargement avec le matériau eutrophique.

16. Méthode selon l'une des revendications 5 à 15, **caractérisée en ce que** les particules, en particulier le matériau zéolitique, sont dotées de cations.

17. Méthode selon la revendication 16, **caractérisée en ce que** les cations sont formés au moyen de cations d'argent et/ou de cations de cuivre et/ou de cations organiques, comme par exemple des amines quadrivalentes.

18. Méthode selon l'une des revendications 5 à 15, **caractérisée en ce que** les particules, en particulier le matériau zéolitique, présentent une capacité d'échange de cations choisie dans une marge allant d'une limite inférieure de 0,5 milligramme équivalent / gramme à une limite supérieure de 5,3 milligrammes équivalents / gramme.

19. Méthode selon l'une des revendications 5 à 15, **caractérisée en ce que** les particules, en particulier le matériau zéolitique, présentent une capacité d'échange de cations choisie dans une marge allant d'une limite inférieure de 1,0 milligramme équivalent / gramme à une limite supérieure de 2,7 milligrammes équivalents / gramme.

20. Méthode selon l'une des revendications 5 à 15, **caractérisée en ce que** les particules, en particulier le matériau zéolitique, présentent une capacité d'échange de cations choisie dans une marge allant d'une limite inférieure de 1,7 milligramme équivalent / gramme à une limite supérieure de 2,2 milligrammes équivalents / gramme.

21. Méthode selon l'une des revendications 5 à 20, **caractérisée en ce qu'**au moins la superficie intérieure des particules, en particulier du matériau zéolitique, est modifiée au moins partiellement au niveau adsorbant avec au moins un polymère organique.

22. Méthode de commande et/ou de régulation d'installations de production de biogaz dans laquelle des échantillons du matériau à faire fermenter sont prélevés et analysés à intervalles périodiques, **caractérisée en ce que** le prélèvement d'échantillons et l'analyse sont exécutés selon une méthode correspondant à l'une des revendications 1 à 21, et le cas échéant, des paramètres de régulation de la fermentation, en particulier la pression, la température et/ou l'humidité de l'air, sont ajustés en fonction des données obtenues sur la base de l'analyse.
